(19) Europäisches Patentamt
European Patent Office
Office européen des brevets

(11) **EP 2 829 870 A1**

(12) **EUROPEAN PATENT APPLICATION**
published in accordance with Art. 153(4) EPC

(43) Date of publication:
**28.01.2015 Bulletin 2015/05**

(51) Int Cl.:
*G01N 29/02* (2006.01)    *C01B 3/34* (2006.01)
*G01N 29/00* (2006.01)    *G01N 29/44* (2006.01)
*H01M 8/04* (2006.01)    *H01M 8/06* (2006.01)

(21) Application number: **13765236.8**

(22) Date of filing: **12.03.2013**

(86) International application number:
**PCT/JP2013/056827**

(87) International publication number:
**WO 2013/141083 (26.09.2013 Gazette 2013/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **19.03.2012 JP 2012061362**

(71) Applicant: **JX Nippon Oil & Energy Corporation Chiyoda-ku Tokyo 100-8162 (JP)**

(72) Inventors:
• **TSUKAGOSHI, Shouichi Tokyo 100-8162 (JP)**
• **MIZUNO, Yasushi Tokyo 100-8162 (JP)**

(74) Representative: **Patentanwälte Vollmann & Hemmer Wallstraße 33a 23560 Lübeck (DE)**

(54) **METHOD FOR DETERMINING COMPOSITION OF GAS FUEL, DEVICE FOR DETERMINING COMPOSITION OF GAS FUEL, FUEL SUPPLY SYSTEM, AND FUEL CELL SYSTEM**

(57) To determine a composition of a hydrocarbon-based gaseous fuel to be supplied to a supply target by a fuel supply device. A speed of sound in the gaseous fuel is measured using an ultrasonic flow meter (101). A carbon number of the gaseous fuel is estimated on the basis of the measured speed of sound (102). The composition (ingredients and ingredient concentration) of the gaseous fuel is estimated on the basis of the estimated carbon number (103). A supply amount of fuel in a fuel supply system is controlled on the basis of the estimated composition.

*FIG. 3*

**Description**

TECHNICAL FIELD

The present invention relates to a method and a device for determining a composition of a hydrocarbon-based gaseous fuel supplied to a supply target by a fuel supply device, and a fuel supply system and a fuel cell system equipped with the composition determining device.

BACKGROUND ART

As the related arts relating to the composition determination of the gaseous fuel, there are those described in Patent Document 1 to 3.

(1) Patent Document 1

As a method for estimating a nitrogen concentration in a fuel off-gas in a fuel cell system, the use of a speed of sound is disclosed. That is, the nitrogen concentration is estimated using the characteristic that the speed of sound of the fuel off-gas varies due to the difference in the ingredients of the fuel off-gas. It is understood that gas to be measured is a mixed gas of hydrogen and nitrogen.

(2) Patent Document 2

In order to estimate a hydrogen concentration in a fuel off-gas in a fuel cell system, the speed of sound of the fuel off-gas is measured using the characteristic that the speed of sound is significantly fast in hydrogen, and the hydrogen concentration is obtained from the speed of sound. The composition of the gas to be measured is substantially defined by water, carbon dioxide, nitrogen and hydrogen.

(3) Patent Document 3

By expressing a plurality of hydrocarbon ingredients in the gas with hydrocarbon of one kind or more and less than all kinds, and by measuring the gas characteristics, the number of which is fewer than the number of active ingredients containing the hydrocarbon by one, an effective composition of the gas is determined.

REFERENCE DODUMENT LIST

PATENT DOCUMENT

Patent Document 1: Japanese Patent Application Laid-open Publication No. 2005-203143

Patent Document 2: Japanese Patent Application Laid-open Publication No. 2003-077518

Patent Document 3: Published Japanese Translation of PCT Publication for International Application No. 2004-514138 (WO 2002/040992)

SUMMARY OF THE INVENTION

PROBLEMS TO BE SOLVED BY THE INVENTION

However, the related arts might have the following problems.

(1) Patent Document 1

There is a description that as the nitrogen concentration in the fuel off-gas increases, the speed of sound in the fuel off-gas varies, and thus, it is possible to estimate the nitrogen concentration by measuring the speed of sound of the fuel off-gas. However, only in such a description, the practical use may be difficult. Furthermore, it is considered that the measurement target is a mixed gas of hydrogen and nitrogen in which the estimation of the composition is easy, and there is no description of gas in which hydrocarbons are complicatedly mixed therein.

(2) Patent Document 2

The measurement target is defined as a mixed gas of hydrogen, water, carbon dioxide, and nitrogen, and is limited thereto. Furthermore, in order to obtain a correlation, there is a need to measure or calculate the concentrations of water, carbon dioxide, nitrogen, or the like in the off-gas in advance.

(3) Patent Document 3

It is required that in all of gas characteristics to be measured, the plurality of hydrocarbon ingredients and hydrocarbons to be used as active ingredients, with respect to the predetermined combination, have the same characteristics. For example, in a case of ethane and a mixed gas of methane and propane at the ratio of 1:1, the speed of sounds thereof are approximately the same (an error of about 0.3%), but when comparing the constant pressure specific heats thereof, there is an error of about 3%. Therefore, there may be the problem in the estimation accuracy.

In view of such circumstances, an object of the present invention is to provide a method and device for determining a composition capable of accurately performing composition determination of a hydrocarbon-based gaseous fuel, and to provide a fuel supply system and a fuel cell system equipped with the composition determining device.

MEANS FOR SOLVING THE PROBLEMS

A method for determining a composition of a gaseous fuel according to the present invention includes the steps of: measuring a speed of sound in the gaseous fuel using an ultrasonic flow meter; estimating a carbon number of the gaseous fuel on the basis of the measured speed of sound; and estimating the composition of the gaseous fuel on the basis of the estimated carbon number.

A device for determining a composition of a gaseous fuel according to the present invention, including: a sound speed measuring unit configured to measure a speed of sound in the gaseous fuel using an ultrasonic flow meter; a carbon number estimating unit configured to estimate a carbon number of the gaseous fuel on the basis of the measured speed of sound; and a composition estimating unit configured to estimate the composition of the gaseous fuel on the basis of the estimated carbon number.

A fuel supply system according to the present invention is a fuel supply system including a fuel supply device configured to supply a hydrocarbon-based gaseous fuel to a supply target, the fuel supply system including: the composition determining device; and a fuel supply amount control device configured to control a supply amount of fuel of the fuel supply device on the basis of the composition determined by the composition determining device.

A fuel cell system according to the present invention including a fuel supply device configured to supply a hydrocarbon-based gaseous fuel, a fuel reforming device configured to generate a hydrogen-rich reformed fuel by reforming the supplied gaseous fuel, and a fuel cell stack configured to perform power generation by an electrochemical reaction between the generated reformed fuel and air, the fuel cell system including the composition determining device, and a fuel supply amount control unit configured to control a supply amount of fuel of the fuel supply device on the basis of the composition determined by the composition determining device.

EFFECTS OF THE INVENTION

According to the present invention, it is possible to relatively accurately estimate the composition of the gaseous fuel. In particular, it is also possible to estimate the composition of gaseous fuel in which hydrocarbons are complicatedly mixed therein. Thus, it is possible to appropriately reflect a variation in composition of gaseous fuel in the control of the supply amount of fuel, in the fuel supply system or the fuel cell system.

BRIEF DESCRIPTION OF THE DRAWINGS

Fig. 1                    is a schematic configuration diagram of a fuel supply system according to a first embodiment of the present invention.

Fig. 2                    is an explanatory diagram of an ultrasonic flow meter.

Fig. 3                    is a functional block diagram of the composition determining unit of the control device.

Fig. 4　　　　　is a chart illustrating the relationship between the speed of sound and the carbon number in a CH-based gas.

Fig. 5　　　　　is a flowchart of composition determination of the gaseous fuel (Part 1).

Fig. 6　　　　　is a flowchart of composition determination of the gaseous fuel (Part 2).

Fig. 7　　　　　is a flowchart of composition determination of the gaseous fuel (Part 3).

Fig. 8　　　　　is a flowchart of fuel supply amount control.

Fig. 9　　　　　is a schematic configuration diagram of a fuel cell system according to a second embodiment of the present invention.

Fig. 10　　　　is a schematic configuration diagram of a fuel cell system illustrating a modified example of the second embodiment.

Figs.11A and 11B　　are explanatory diagrams of modified examples relating to an arrangement position of sensors.

MODE FOR CARRING OUT THE INVENTION

Hereinafter, embodiments of the present invention will be described in detail.

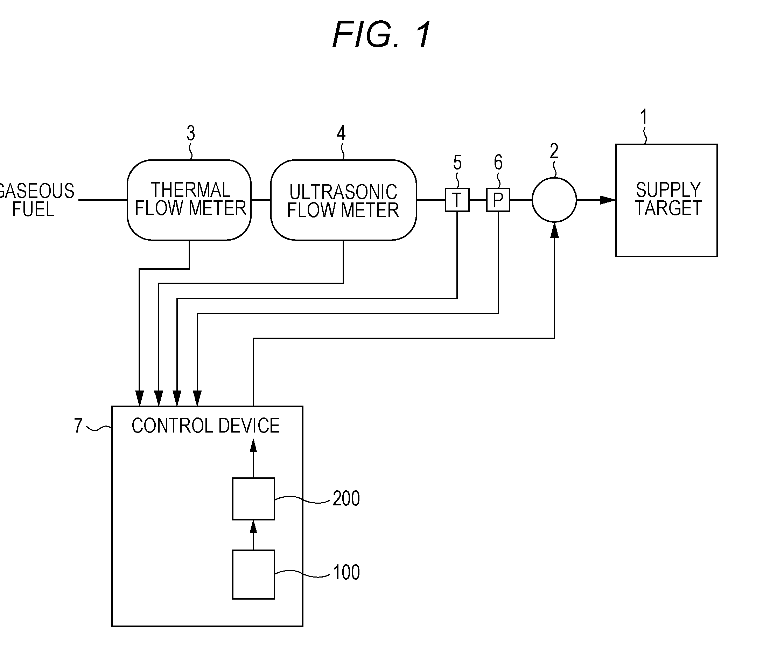

First, as a first embodiment of the present invention, an embodiment in which the present invention is applied to composition determination of a gaseous fuel in a general-purpose fuel supply system will be described with reference to Figs. 1 to 8.

Fig. 1 is a schematic configuration block diagram of the fuel supply system according to the first embodiment of the present invention.

The fuel supply system of the present embodiment includes a fuel supply device 2 that supplies a hydrocarbon-based gaseous fuel to a supply target (various types of gas equipment) 1.

The fuel supply device 2 is constituted by a pump and/or a flow control valve or the like connected to a gaseous fuel supply source, and a supply amount is controlled on the basis of a signal from a control device 7.

In a supply pathway to the supply target 1, through which the gaseous fuel is supplied by the fuel supply device 2, a thermal flow meter (mass flow meter) 3, an ultrasonic flow meter (volumetric flow meter) 4, a fuel temperature sensor 5, and a fuel pressure sensor 6 are provided on an upstream side (or a downstream side) of the fuel supply device 2. The components 3 to 6 may be arranged in any order.

The thermal flow meter 3 measures a flow rate using a thermal diffusion effect of the gas, and since an amount of heat transmitted by the gas varies based on a compression degree of the gas, it is possible to measure a mass flow rate. The thermal flow meter 3 has characteristics in which the size reduction is easy and responsiveness is satisfactory due to the size reduction. However, since the output varies depending on the composition of the gas to be measured, it is common to use the thermal flow meter 3 with adjustment for the specified composition of the gas to be measured.

The ultrasonic flow meter 4 is able to measure a volumetric flow rate without depending on the composition of the gas to be measured.

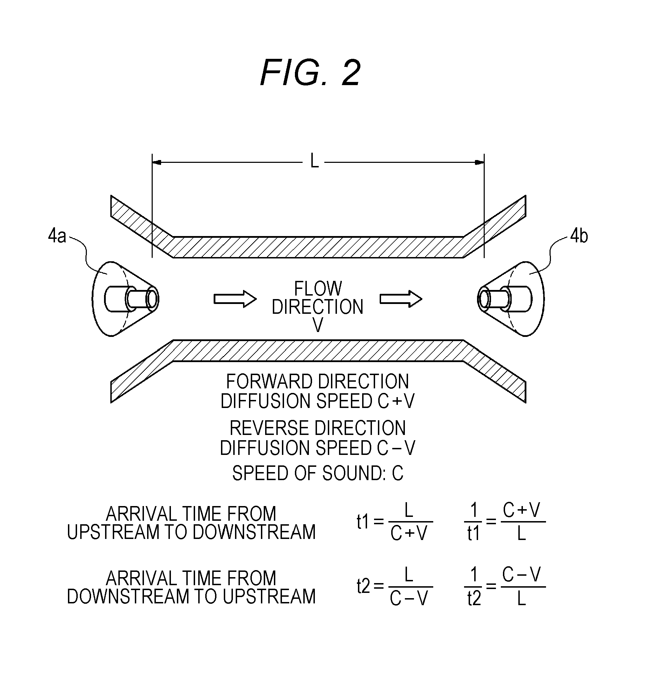

The measurement principle of the ultrasonic flow meter 4 will be described with reference to Fig. 2.

The ultrasonic flow meter 4 is formed by disposing ultrasonic transceivers 4a and 4b each equipped with ultrasonic transducers on an upstream side and a downstream side in a flow direction to face each other, thereby measuring an arrival time t1 of the ultrasonic wave from upstream to downstream (forward direction), and an arrival time t2 of the ultrasonic wave from downstream to upstream (reverse direction).

Here, when assuming a flow velocity of gas to be V and a speed of sound in gas to be C, a diffusion speed in the forward direction is C + V, and a diffusion speed in the reverse direction is C - V.

Therefore, when assuming a distance to be L, the following formulas are obtained.

$$t1 = L/(C + V) \quad \rightarrow \quad 1/t1 = (C + V)/L \cdots (1)$$

$$t2 = L/(C - V) \quad \rightarrow \quad 1/t2 = (C - V)/L \cdots (2)$$

Therefore, it is possible to obtain the flow velocity V from Formulae (1) and (2), by Formula (3) described below. In addition, it is possible to obtain the speed of sound C by Formula (4) described below as well.

$$V = (1/t1 - 1/t2) \times L/2 \quad \cdots (3)$$

$$C = (1/t1 + 1/t2) \times L/2 \quad \cdots (4)$$

Therefore, it is possible to use the ultrasonic flow meter 4 as a sound speed measuring unit for measuring the speed of sound in the gaseous fuel.

The fuel temperature sensor 5 measures a fuel temperature Tf in the vicinity of the flow rate measuring portion. The fuel pressure sensor 6 measures a fuel pressure Pf in the vicinity of the flow rate measuring portion.

Measurement signals of the thermal flow meter 3, the ultrasonic flow meter 4, the fuel temperature sensor 5, and the fuel pressure sensor 6 are sent to the control device 7.

The control device 7 includes a microcomputer, performs the arithmetic processing in accordance with a control program, and controls the operation of the fuel supply device 2, while reading signals from various sensors, such as the thermal flow meter 3, the ultrasonic flow meter 4, the fuel temperature sensor 5, and the fuel pressure sensor 6. The control device 7 may control various other devices, simultaneously with the control of the fuel supply device 2.

Next, the control of a supply amount of fuel performed by the control device 7 will be described.

When the composition of the gaseous fuel can be specified, a conversion factor of the thermal flow meter 3 is set on the basis of the specified composition, and then, the supply amount of fuel is controlled using the thermal flow meter 3. That is, a target supply amount of fuel is set according to target supply conditions, and the supply amount of gaseous fuel is controlled via the fuel supply device 2. Here, feedback control is performed referring to the measured flow rate of the thermal flow meter 3.

Meanwhile, when the composition of the gaseous fuel varies, the supply amount of fuel is controlled using the ultrasonic flow meter 4 and thermal flow meter 3, while performing the composition determination.

For this reason, the control device 7 is equipped with a composition determining unit (composition determining device) 100 configured to determine the composition of the hydrocarbon-based gaseous fuel supplied to the supply target 1 by the fuel supply device 2 in cooperation with the ultrasonic flow meter 4, and a fuel supply amount control unit 200 configured to control the supply amount of fuel of the fuel supply device 2 on the basis of the composition determined by the composition determining unit 100.

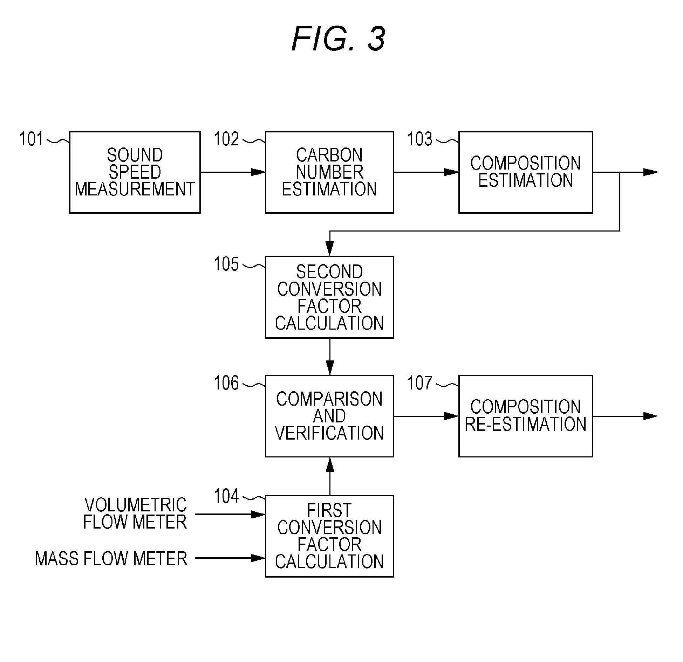

As illustrated in the functional block diagram of Fig. 3, the composition determining unit (composition determining device) 100 includes a sound speed measuring unit 101 configured to measure the speed of sound in the gaseous fuel using the ultrasonic flow meter 4, a carbon number estimating unit 102 configured to estimate a carbon number of the gaseous fuel on the basis of the measured speed of sound, and a composition estimating unit 103 configured to estimate the composition (ingredients and ingredient concentration) of the gaseous fuel on the basis of the estimated carbon number.

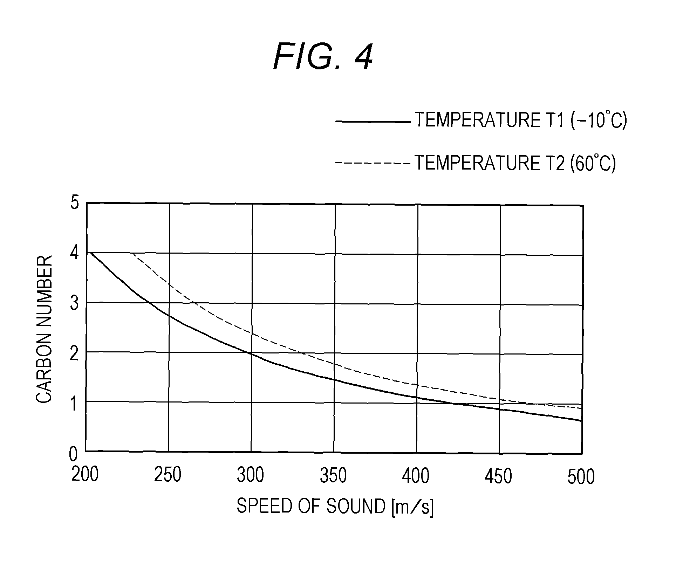

The carbon number estimating unit 102 estimates the carbon number from a temperature and the speed of sound, using a table or a function of the carbon number with respect to the speed of sound at each temperature for the CH-based gas as illustrated in Fig. 4.

The composition estimating unit 103 specifies a sub-ingredient from predetermined sub-ingredient candidates, depending on the comparison result between the estimated carbon number and a carbon number previously determined for a main ingredient of the gaseous fuel, and estimates concentrations of the main ingredient and the specified sub-ingredient.

Furthermore, the composition determining unit (composition determining device) 100 includes a first conversion factor calculating unit 104 configured to calculate a conversion factor of the mass flow meter on the basis of the measurement results of the mass flow meter (thermal flow meter 3) and the volumetric flow meter (ultrasonic flow meter 4), a second conversion factor calculating unit 105 configured to calculate an estimated conversion factor in the composition estimated by the composition estimating unit 103, and a comparison-and-verification unit 106 configured to compare and verify the estimation results of the composition estimating unit 103 by comparing the calculation results of the first and second conversion factor calculating units 104 and 105.

Furthermore, the composition determining unit (composition determining device) 100 includes a composition re-estimating unit 107 that estimates the composition of gaseous fuel again, assuming that another ingredient is mixed in the gaseous fuel when the comparison-and-verification unit 106 determines that there is a mismatch.

For example, the fuel supply amount control unit 200 in the control device 7 estimates a calorific value of the gaseous fuel on the basis of the composition determined by the composition determining unit (composition determining device) 100, and controls the supply amount of gaseous fuel so that the calorific value per unit time becomes a predetermined value.

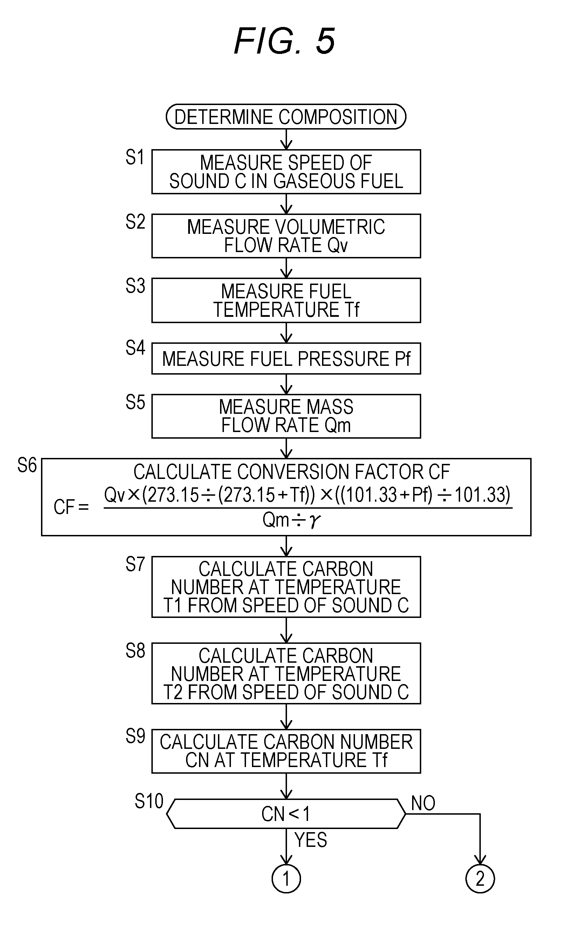

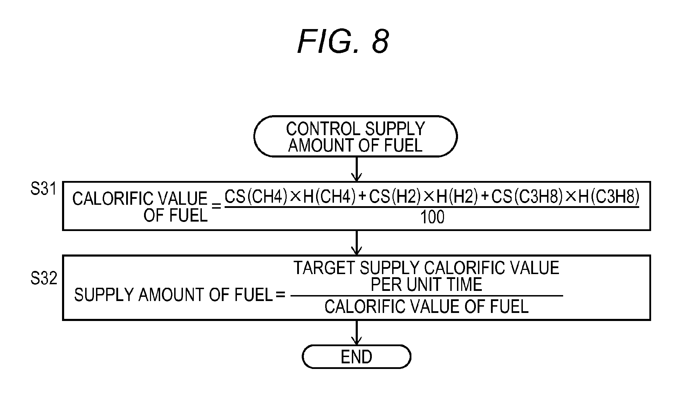

The function of the composition determining unit (composition determining device) 100 (101 to 107) is achieved by the flowcharts of Figs. 5 to 7, and the function of the fuel supply amount control unit 200 is achieved by the flowchart of Fig. 8.

Figs. 5 to 7 are flowcharts of the composition determination of the gaseous fuel.

In S1, a speed of sound C of the gaseous fuel is measured on the basis of the intermediate output of the ultrasonic flow meter 4.

In S2, a volumetric flow rate Qv of the gaseous fuel is measured on the basis of the output of the ultrasonic flow meter 4.

In S3, a temperature Tf of the gaseous fuel is measured on the basis of the output of the fuel temperature sensor 5.

In S4, a pressure Pf of the gaseous fuel is measured on the basis of the output of the fuel pressure sensor 6.

In S5, a mass flow rate Qm of the gaseous fuel is measured on the basis of the output of the thermal flow meter 3.

In S6, a conversion factor CF is calculated by the following formula. Conversion factor $CF = [Qv \times (273.15 \div (273.15 + Tf)) \times ((101.33 + Pf) \div 101.33)]/[Qm \div \gamma]$

A denominator $[Qm \div \gamma]$ of the calculation formula of the conversion factor CF is obtained by converting the mass flow rate Qm, the measured value of the thermal flow meter 3, into a normal flow rate (volumetric flow rate in the standard state). That is, it is obtained by dividing the mass flow rate Qm by the specific gravity $\gamma$ (specific gravity at the standard state of the design gas composition) and converting the divided value into the volumetric flow rate Q1 (see the following formula) at the standard state.

$$Q1 = Qm \div \gamma$$

A numerator of the calculation formula of the conversion factor CF is obtained by converting the volumetric flow rate Qv, the measured value of the ultrasonic flow meter 4, into a normal value. That is, the numerator is obtained by converting the volumetric flow rate Qv into a flow rate Q2 (see the following formula) at the standard (normal) state, using the fuel temperature Tf and the fuel pressure Pf.

$$Q2 = Qv \times (273.15 \div (273.15 + Tf)) \times ((101.33 + Pf) \div 101.33)$$

Therefore, the conversion factor CF is calculated as a ratio of the normal conversion value Q1 of the measured value of the mass flow meter to the normal conversion value Q2 of the measured value of the volumetric flow meter (see the following formula).

$$Conversion factor\ CF = Q2/Q1$$

In S7 to S9, a carbon number of the gaseous fuel is estimated from the speed of sound C of the gaseous fuel.

Here, the table of Fig. 4 or the function is used for the estimation.

Fig. 4 illustrates the relationship between the speed of sound and the carbon number for the CH-based gas in terms of the temperature. That is, a solid line indicates the relationship between the speed of sound and the carbon number at a temperature T1 (for example, -10°C), and a dotted line indicates the relationship between the speed of sound and the carbon number at a temperature T2 (for example, 60°C).

In S7, a carbon number (CN1) at the temperature T1 is obtained from the speed of sound C of the gaseous fuel with reference to the characteristics of the solid line of Fig. 4.

In S8, a carbon number (CN2) at the temperature T2 is obtained from the speed of sound C of the gaseous fuel with reference to the characteristics of the dotted line of Fig. 4.

In S9, a carbon number CN at the temperature Tf (current actual temperature) is obtained on the basis of the carbon number (CN1) at temperature T1 and the carbon number (CN2) at the temperature T2, by interpolation.

In S10, it is determined whether the carbon number CN of the gaseous fuel estimated by processing in S6 to S9 is less than 1. This is to approximate the composition depending on the result of determination. Specifically, this is to specify the sub-ingredient from the predetermined sub-ingredient candidates (hydrogen H2, propane C3H8), depending on the result of comparison between the estimated carbon number CN of the gaseous fuel and the carbon number (1) of methane CH4, which is the main ingredient of the gaseous fuel.

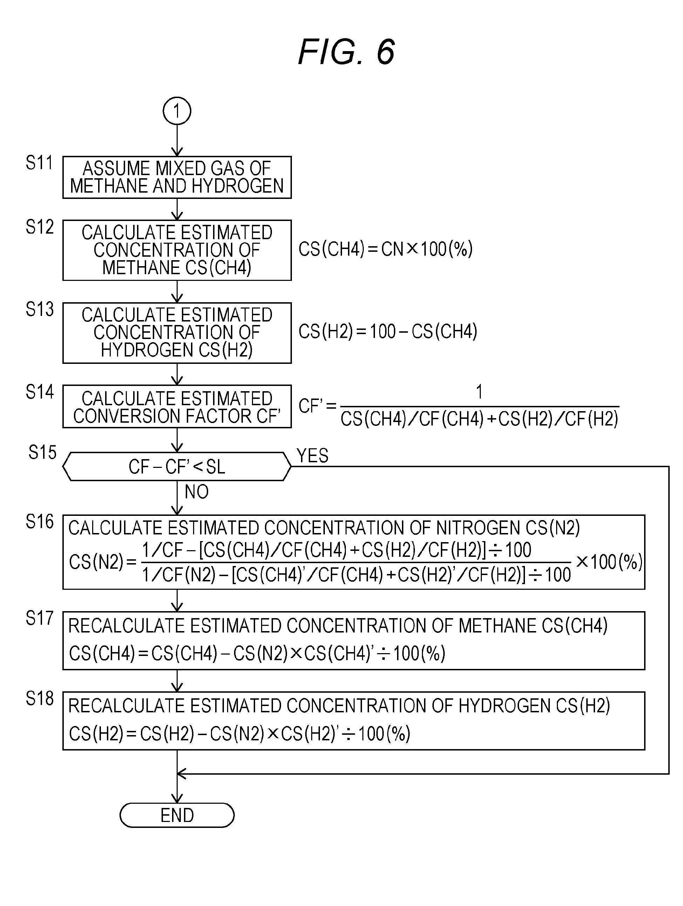

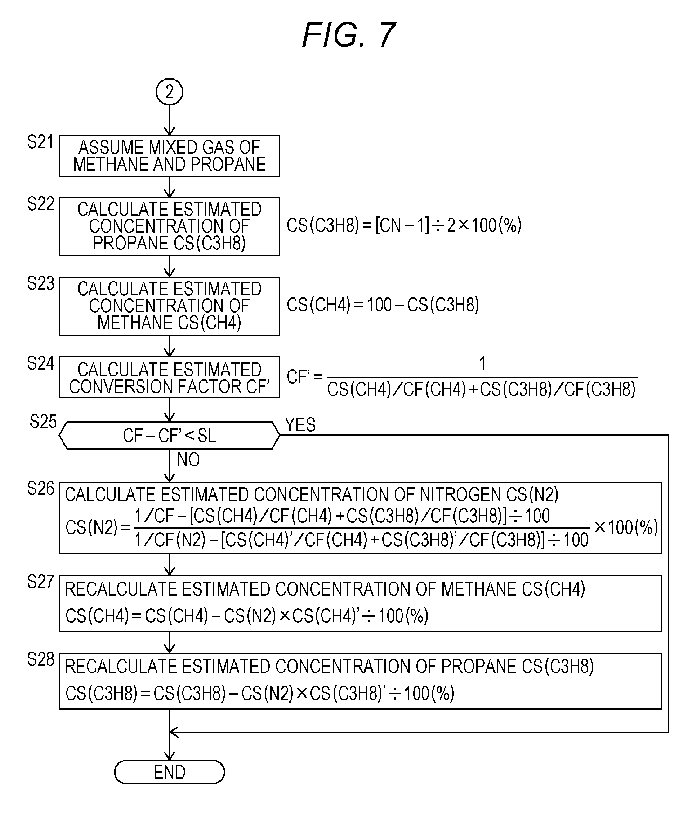

In a case of CN < 1, the process proceeds to S11 in the flow of Fig. 6, and it is assumed that the sub-ingredient is hydrogen and the gaseous fuel is a mixed gas of methane and hydrogen. In a case of CN > 1, the process proceeds to S21 in the flow of Fig. 7, and it is assumed that the sub-ingredient is propane and the gaseous fuel is a mixed gas of methane and propane.

The flow of Fig. 6 in a case of the carbon number CN < 1 will be described.

In S11, it is assumed that the gaseous fuel is a mixed gas of methane CH4 (carbon number is 1) and hydrogen H2 (carbon number is 0).

In S12, an estimated methane concentration CS(CH4) is calculated from the carbon number CN on the basis of the above-described assumption (see the following formula).

$$CS(CH4) = CN \times 100 \ (\%)$$

In S13, an estimated hydrogen concentration CS(H2) is calculated from the estimated methane concentration CS(CH4) (see the following formula).

$$CS(H2) = 100 - CS(CH4)$$

In S14, an estimated conversion factor CF' of the gaseous fuel is calculated from the estimated methane concentration CS(CH4) and the estimated hydrogen concentration CS(H2), using the conversion factor CF(CH4) of methane CH4 and the conversion factor CF(H2) of hydrogen H2 (see the following formula).

$$CF' = 1/[CS(CH4)/CF(CH4) + CS(H2)/CF(H2)]$$

Furthermore, the conversion factor can be calculated by the following general formula.

$$Conversion \ factor \ = \ 1/\Sigma(volumetric \ fraction \ of \ ingredient$$
$$i/conversion \ factor \ of \ ingredient \ i)$$

Furthermore, it is possible to obtain the relationship of the volumetric fraction = molar fraction, in disregard of the compression factor.

In S15, the conversion factor CF obtained in S6 is compared to the estimated conversion factor CF' obtained in S14 to determine whether the conversion factors match or do not match. Specifically, it is determined whether the difference between the conversion factors is less than a predetermined slice level SL (CF - CF' < SL). The reason is to verify the composition estimation in S12 and S13 by comparing them.

In a case of CF - CF' < SL, the composition estimation in S12 and S13 is considered to be correct, and the process ends.

In a case of CF - CF' > SL, the gaseous fuel is considered to be a mixed gas of methane CH4, hydrogen H2 and nitrogen N2, and the recalculation is performed in S16 to S18. That is, when the result of comparison and verification indicates a mismatch, it is assumed that another ingredient (nitrogen N2) be mixed in the gaseous fuel, and the composition of the gaseous fuel is estimated again.

In S16, an estimated nitrogen concentration CS(N2) is calculated by the following formula.

$$CS(N2) = A/B \times 100 \ (\%)$$

$$A = 1/CF - [CS(CH4)/CF(CH4) + CS(H2)/CF(H2)] \div 100$$

$$B = 1/CF(N2) - [CS(CH4)'/CF(CH4) + CS(H2)'/CF(H2)] \div 100$$

In Formula A, CF is the conversion factor, CS(CH4) is the estimated methane concentration, CF(CH4) is the conversion factor of methane, CS(H2) is the estimated hydrogen concentration, and CF(H2) is the conversion factor of hydrogen.

In Formula B, CF(N2) is a conversion factor of nitrogen, CS(CH4)' is a methane concentration in a nitrogen-equivalent gas, CF(CH4) is the conversion factor of methane, CS(H2)' is a hydrogen concentration in the nitrogen-equivalent gas, and CF(H2) is the conversion factor of hydrogen.

The methane concentration in the nitrogen-equivalent gas is a methane concentration X (%) in a gas of methane and hydrogen at a predetermined mixing ratio, the speed of sound of which is the same as that of nitrogen, and this methane concentration can be obtained by calculation in advance.

The hydrogen concentration in the nitrogen-equivalent gas is a hydrogen concentration Y (%) in a gas of methane and hydrogen at a predetermined mixing ratio, the speed of sound of which is the same as that of nitrogen. There is a relationship of Y = 100 - X.

In S17, the estimated methane concentration CS(CH4) is calculated again by the following formula.

$$CS(CH4) = CS(CH4) - CS(N2) \times CS(CH4)' \div 100 \ (\%)$$

On the right side of the formula, CS(CH4) is the estimated methane concentration (calculated in S12), CS(N2) is the estimated nitrogen concentration, and CS(CH4)' is the methane concentration in the nitrogen-equivalent gas.

In S18, the estimated hydrogen concentration CS(H2) is calculated again by the following formula.

$$CS(H2) = CS(H2) - CS(N2) \times CS(H2)' \div 100 \ (\%)$$

On the right side of the formula, CS(H2) is the estimated hydrogen concentration (calculated in S13), CS(N2) is the estimated nitrogen concentration, and CS(H2)' is the hydrogen concentration in the nitrogen-equivalent gas.

The flow of Fig. 7 in a case of the carbon number CN > 1 will be described.

In S21, it is assumed that gaseous fuel is a mixed gas of methane CH4 (carbon number is 1) and propane C3H8 (carbon number is 3).

In S22, an estimated propane concentration CS(C3H8) is calculated from the carbon number CN, on the basis of the assumption (see the following formula).

$$CS(C3H8) = [CN - 1] \div 2 \times 100 \ (\%)$$

In S23, an estimated methane concentration CS(CH4) is calculated from the estimated propane concentration CS(C3H8) (see the following formula).

$$CS(CH4) = 100 - CS(C3H8)$$

In S24, an estimated conversion factor CF' of the gaseous fuel is calculated from the estimated methane concentration CS(CH4) and the estimated propane concentration CS(C3H8), using the conversion factor CF(CH4) of methane CH4 and the conversion factor CF(C3H8) of propane C3H8 (see the following formula).

$$CF' = 1/[CS(CH4)/CF(CH4) + CS(C3H8)/CF(C3H8)]$$

In S25, the conversion factor CF obtained in S6 is compared to the estimated conversion factor CF' obtained in S24 to determine whether the conversion factors match or do not match. Specifically, it is determined whether the difference between the conversion factors is less than the predetermined slice level SL (CF - CF' < SL). The reason is to verify the composition estimation in S22 and S23 by comparing them.

In a case of CF - CF' < SL, the composition estimation in S22 and S23 is considered to be correct, and the process ends.

In a case of CF - CF' > SL, the gaseous fuel is considered to be a mixed gas of methane CH4, propane C3H8 and nitrogen N2, and the recalculation is performed in S26 to S28. That is, when the result of comparison and verification indicates a mismatch, it is considered that another ingredient (nitrogen N2) be mixed in the gaseous fuel, and the composition of the gaseous fuel is estimated again.

In S26, an estimated nitrogen concentration CS(N2) is calculated by the following formula.

$$CS(N2) = A/B \times 100 \ (\%)$$

$$A = 1/CF - [CS(CH4)/CF(CH4) + CS(C3H8)/CF(C3H8)] \div 100$$

$$B = 1/CF(N2) - [CS(CH4)'/CF(CH4) + CS(C3H8)'/CF(C3H8)] \div 100$$

In Formula A, CF is the conversion factor, CS(CH4) is the estimated methane concentration, CF(CH4) is the conversion factor of methane, CS(C3H8) is the estimated propane concentration, and CF(C3H8) is the conversion factor of propane.

In Formula B, CF(N2) is a conversion factor of nitrogen, CS(CH4)' is a methane concentration in a nitrogen-equivalent gas, CF(CH4) is the conversion factor of methane, CS(C3H8)' is a propane concentration in the nitrogen-equivalent gas, and CF(C3H8) is the conversion factor of propane.

The methane concentration in the nitrogen-equivalent gas is a methane concentration X' (%) in a gas of methane and propane at a predetermined mixing ratio, the speed of sound of which is the same as that of nitrogen, and this methane concentration can be obtained by calculation in advance.

The propane concentration in the nitrogen-equivalent gas is a propane concentration Y' (%) in the gas of methane and propane at a predetermined mixing ratio, the speed of sound of which is the same as that of nitrogen. There is a relationship of Y' = 100 - X'.

In S27, the estimated methane concentration CS(CH4) is calculated again by the following formula.

$$CS(CH4) = CS(CH4) - CS(N2) \times CS(CH4)' \div 100 \ (\%)$$

On the right side of the formula, CS(CH4) is the estimated methane concentration (calculated in S22), CS(N2) is the estimated nitrogen concentration, and CS(CH4)' is the methane concentration in the nitrogen-equivalent gas.

In S28, the estimated propane concentration CS(C3H8) is calculated again by the following formula.

$$CS(C3H8) = CS(C3H8) - CS(N2) \times CS(C3H8)' \div 100 \ (\%)$$

On the right side of the formula, CS(C3H8) is the estimated propane concentration (calculated in S23), CS(N2) is the estimated nitrogen concentration, and CS(C3H8)' is the propane concentration in the nitrogen-equivalent gas.

Fig. 8 is a flowchart of the fuel supply amount control based on the composition determination.

In S31, a calorific value of the gaseous fuel (calorific value that occurs when fuel of a certain unit is completely combusted) is calculated. Specifically, the calorific value of the gaseous fuel is calculated from each of the previously prepared known calorific values H(CH4), H(H2) and H(C3H8) of CH4, H2 and C3H8, and the concentration of each ingredients CS(CH4), CS(H2) and CS(C3H8) of CH4, H2 and C3H8, obtained in the flow of Figs. 5 to 7, by the following formula.

$$\text{Calorific value of fuel} = [CS(CH4) \times H(CH4) + CS(H2) \times H(H2) + CS(C3H8) \times H(C3H8)]/100$$

In S32, a supply amount of fuel is calculated on the basis of the calorific value of gaseous fuel obtained in S31 so as to obtain a target supply calorific value per unit time. Specifically, the supply amount of fuel is calculated by dividing the target supply calorific value per unit time by the calorific value of the gaseous fuel.

$$\text{Supply amount of fuel} = (\text{target supply calorific value per unit time})/(\text{calorific value of fuel})$$

The supply amount of fuel calculated in this way is set to a control target value, and the supply amount of fuel is controlled via the fuel supply device 2.

According to the composition determining device of the present embodiment, since the device includes the sound speed measuring unit 101 configured to measure the speed of sound in the gaseous fuel using the ultrasonic flow meter 4, the carbon number estimating unit 102 configured to estimate the carbon number of the gaseous fuel on the basis of the measured speed of sound, and the composition estimating unit 103 configured to estimate the composition (ingredients and ingredient concentration) of the gaseous fuel on the basis of the estimated carbon number, it is possible to relatively accurately estimate the composition of the gaseous fuel, and in particular, it is also possible to estimate the composition of gaseous fuel in which hydrocarbons are complicatedly mixed therein.

Furthermore, according to the composition determining device of the present embodiment, since the carbon number estimating unit 102 estimates the carbon number from the temperature and the speed of sound on the basis of the characteristic of the carbon number with respect to the speed of sound at each temperature (specifically, using the table or function), it is possible to easily and accurately estimate the carbon number.

Furthermore, according to the composition determining device of the present embodiment, since the composition estimating unit 103 specifies the sub-ingredient from the predetermined sub-ingredient candidates (H2, C3H8) depending on the result of comparison between the estimated carbon number and the carbon number (1) previously determined for the main ingredient (CH4) of the gaseous fuel, and the composition estimating unit 103 estimates the concentrations of the main ingredient (CH4) and the specified sub-ingredient (H2 or C3H8), it is possible to perform the relatively simple estimation.

Furthermore, according to the composition determining device of the present embodiment, since the device includes the mass flow meter (thermal flow meter 3) configured to measure the mass flow rate of the gaseous fuel supplied by the fuel supply device 2, the volumetric flow meter (ultrasonic flow meter 4) configured to measure the volumetric flow rate of the gaseous fuel supplied by the fuel supply device 2, the first conversion factor calculating unit 104 configured to calculate a conversion factor CF of the mass flow meter on the basis of the measurement results of the mass flow meter and the volumetric flow meter, the second conversion factor calculating unit 105 configured to calculate the estimated conversion factor CF' in the composition estimated by the composition estimating unit 103, and the comparison-and-verification unit 106 configured to compare and verify the estimation results of the composition estimating unit 103 by comparing the calculation results of the first and second conversion factor calculating units 104 and 105, it is possible to improve reliability of the estimation.

Furthermore, according to the present embodiment, since the volumetric flow meter is the ultrasonic flow meter 4, and the sound speed measuring unit 101 measures the speed of sound in the gaseous fuel on the basis of the intermediate output of the ultrasonic flow meter 4, it is possible to reduce an increase in cost.

Furthermore, according to the composition determining device of the present embodiment, since the device includes the composition re-estimating unit 107 that estimates the composition of gaseous fuel again assuming that another ingredient (N2) is mixed in the gaseous fuel when the comparison-and-verification unit 106 determines that there is a mismatch, it is possible to further improve the reliability of the estimation.

Furthermore, according to the fuel supply system of the present embodiment, since there is provided the fuel supply amount control unit 200 configured to control the supply amount of fuel of the fuel supply device 2 on the basis of the composition determined by the composition determining unit 100, it is possible to appropriately reflect a variation in composition of the gaseous fuel in the control of the supply amount of fuel.

Furthermore, according to the fuel supply system of the present embodiment, since the fuel supply amount control unit 200 estimates the calorific value of gaseous fuel on the basis of the composition estimated by the composition estimating unit 103, and controls the supply amount of gaseous fuel so that the calorific value per unit time becomes the predetermined value, it is possible to perform the appropriate control on the basis of the composition estimation of the gaseous fuel and it is possible to maintain the constant supply calorific value per unit time, even when the composition of the gaseous fuel varies. In other words, it is possible to control the supply amount of gaseous fuel by taking the calorific value as the management value.

Although, in the above-described embodiment, the supply target (gas equipment) of the fuel supply system was not described, the supply target is not particularly limited and may be used as a general-purpose fuel supply system. Examples of the applications thereof may include the combustion application requiring the control of the air-fuel ratio, and the chemical reaction application requiring the grasp of the raw material composition. Individual examples of combustion applications may include a boiler and a gas engine. The gas engine is used for a household cogeneration system (a system, in which a gas engine fueled by city gas or LPG performs power generation, and heat generated thereby is used to supply hot water; common name "ECOWILL (R)"), a GHP system (an air conditioning system that drives a compressor by a gas engine and performs cooling and heating by a heat-pump operation), an industrial private power generation system, or the like. Individual examples of the chemical reaction applications may include a synthetic gas manufacturing device. The synthetic gas manufacturing device uses natural gas, LPG or the like as a raw material, and produces the synthetic gas mainly containing $H_2$ and $CO$, using various reforming methods. The produced synthetic gas is used as a raw material gas for ammonia synthesis, methanol synthesis or the like. Recently, a demand for synthetic gas in association with new energy production such as GTL, DME, or SNG has been focused.

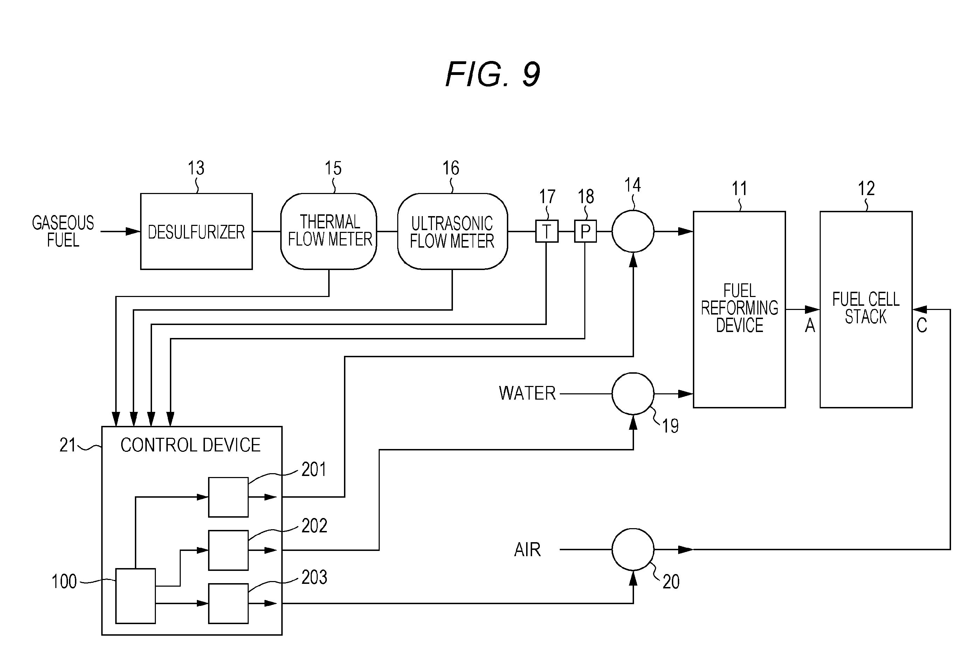

Next, as a second embodiment of the present invention, an embodiment in which the present invention is applied to a fuel cell system will be described with reference to Fig. 9.

Fig. 9 is a schematic configuration diagram of the fuel cell system according to the second embodiment of the present invention.

The fuel cell system of the present embodiment includes a fuel reforming device 11 configured to generate a reformed hydrogen-rich fuel by performing the steam reforming of the hydrocarbon-based gaseous fuel, and a fuel cell stack (assembly of fuel cells) 12 configured to generate electricity by electrochemical reaction between the reformed fuel (hydrogen) from the fuel reforming device 11 and air (oxygen).

The gaseous fuel from the gaseous fuel supply source is subjected to desulfurization removing sulfur compounds in the gaseous fuel by a desulfurizer 13, and then the gaseous fuel is supplied to the fuel reforming device 11 by a fuel supply device 14.

The fuel supply device 14 is constituted by a pump and/or a flow rate control valve or the like, and a supply amount of gaseous fuel is controlled based on a signal from a control device 21.

In the supply pathway to the fuel reforming device 11, through which the gaseous fuel is supplied by the fuel supply device 14, a thermal flow meter (mass flow meter) 15, an ultrasonic flow meter 16, a fuel temperature sensor 17, and a fuel pressure sensor 18 are provided on an upstream side (or a downstream side) of the fuel supply device 14. The components 15 to 18 may be arranged in any order.

Since the thermal flow meter 15, the ultrasonic flow meter 16, the fuel temperature sensor 17, and the fuel pressure sensor 18 are the same as the thermal flow meter 3, the ultrasonic flow meter 4, the fuel temperature sensor 5, and the fuel pressure sensor 6 of the first embodiment (Fig. 1), respectively, the description thereof will not be provided.

Measurement signals of the thermal flow meter 15, the ultrasonic flow meter 16, the fuel temperature sensor 17, and the fuel pressure sensor 18 are sent to the control device 21.

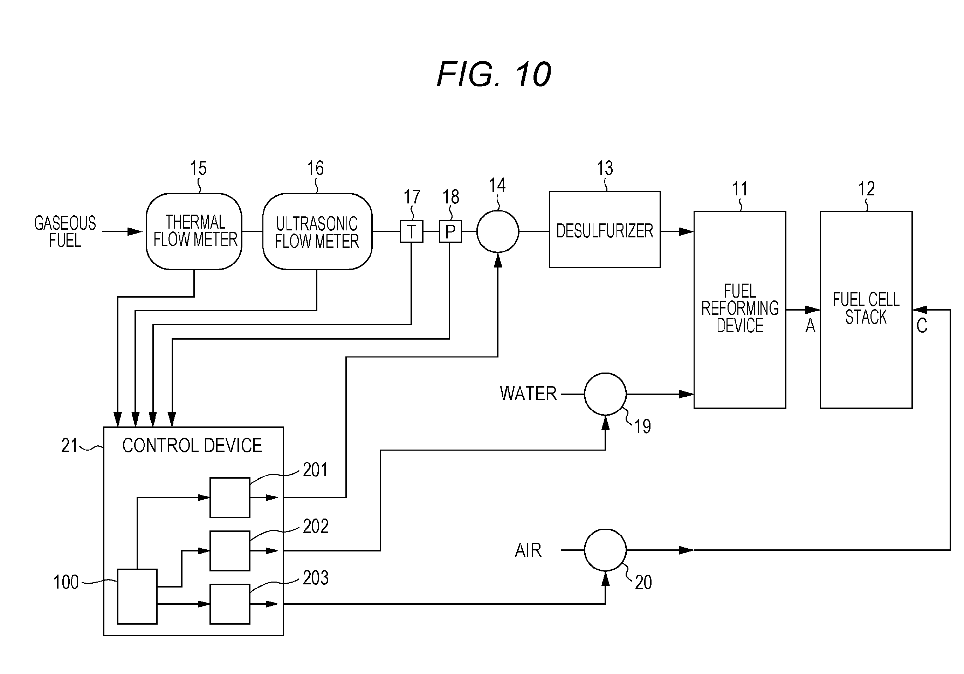

Although, in Fig. 9, the desulfurizer 13 is disposed on the upstream side of the fuel supply device 14, the thermal flow meter 15, the ultrasonic flow meter 16, the fuel temperature sensor 17, and the fuel pressure sensor 18, the desulfurizer 13 may be disposed on the downstream side of the fuel supply device 14, the thermal flow meter 15, the ultrasonic flow meter 16, the fuel temperature sensor 17, and the fuel pressure sensor 18, as illustrated in Fig. 10. The arrangement of Fig. 9 is preferable to satisfactorily perform the supply control and the measurement of gaseous fuel even when the gaseous fuel is adsorbed to the desulfurizer 13. Therefore, for a low-temperature adsorption type desulfurizer, the arrangement of Fig. 9 may be adopted. In contrast, for a desulfurizer operating at a high temperature such as a high-temperature adsorption type and a hydrodesulfurization type, there is a need to avoid the fuel supply device 14 or the like from being placed in the high-temperature environments, and there is no problem of adsorption of the gaseous fuel, the arrangement of Fig. 10 may be adopted.

The for-reforming water for performing the steam reforming in the fuel reforming device 11 is supplied by a for-reforming water supply device 19. The for-reforming water supply device 19 is constituted by a pump and/or a flow rate control valve or the like connected to a water supply source, and the supply amount of for-reforming water is controlled based on a signal from the control device 21.

The reformed fuel from the fuel reforming device 11 is supplied to an anode (A) of the fuel cell stack 12, and air is supplied to a cathode (C) thereof. The cathode air is supplied by a cathode air supply device 20. The cathode air supply device 20 is constituted by a pump (blower) and/or a flow rate control valve or the like connected to the air supply source, and the supply amount is controlled based on a signal from the control device 21.

The control device 21 includes a microcomputer, performs the arithmetic processing in accordance with a control program, and controls the operation of various types of equipment, such as the fuel supply device 14, the for-reforming water supply device 19, and the cathode air supply device 20, while reading signals from various sensors, such as the thermal flow meter 15, the ultrasonic flow meter 16, the fuel temperature sensor 17, and the fuel pressure sensor 18.

In the fuel reforming device 11, in a case of methane CH4, the steam reforming reaction of Formula (5) described below is carried out, and in a case of propane C3H8, the steam reforming reaction of Formula (6) described below is carried out.

$$CH_4 + 2H_2O \rightarrow CO_2 + 4H_2 \cdots (5)$$

$$C_3H_8 + 6H_2O \rightarrow 3CO_2 + 10H_2 \cdots (6)$$

Furthermore, in the fuel cell stack 12, the electrode reaction of Formula (7) described below occurs at the cathode of each cell, and the electrode reaction of Formula (8) described below occurs at the anode, thereby performing the power generation.

$$Cathode: 1/2O_2 + 2e^- \rightarrow O^{2-} \text{ (solid electrolyte)} \cdots (7)$$

$$Anode: O^{2-} \text{ (solid electrolyte)} + H_2 \rightarrow H_2O + 2e^- \cdots (8)$$

Next, the control of fuel, the for-reforming water, and the cathode air using the control device 21 will be described.

When the composition of gaseous fuel can be specified, the supply amount of fuel is controlled using the thermal flow meter 15 after setting the conversion factor of the thermal flow meter 15 on the basis of the specified composition. That is, a supply amount of fuel (target value) is set in accordance with a target power generation conditions, and a supply amount of gaseous fuel is controlled via the fuel supply device 14. At this time, feedback control is performed, referring to the measured flow rate of the thermal flow meter 15. Furthermore, a supply amount of for-reforming water (target value) is set, referring to the measured flow rate of the thermal flow meter 15, for example, and a supply amount of for-reforming water is controlled via the for-reforming water supply device 19. Furthermore, a supply amount of cathode air (target value) is set, according to the target power generation condition or referring to the measured flow rate of the thermal flow meter 15, for example, and a supply amount of cathode air is controlled via the cathode air supply device 20.

Meanwhile, when the composition of gaseous fuel varies, the supply amount of fuel, the supply amount of for-reforming water, and the supply amount of cathode air are controlled using the ultrasonic flow meter 16 and the thermal flow meter 15, while performing the composition determination.

For this reason, the control device 21 is equipped with a composition determining unit (composition determining device) 100 configured to determine the composition of the hydrocarbon-based gaseous fuel supplied to the fuel reforming device 11 by the fuel supply device 14 in cooperation with the ultrasonic flow meter 16, a fuel supply amount control unit 201 configured to control the supply amount of fuel of the fuel supply device 2 on the basis of the composition determined by the composition determining unit 100, a for-reforming water supply amount control unit 202 configured to control the supply amount of for-reforming water of the for-reforming water supply device 19, and a cathode air supply amount control unit 203 configured to control the supply amount of cathode air of the cathode air supply device 20.

The composition determining unit 100 is the same as the composition determining unit 100 described in the first embodiment, and is configured as illustrated in the functional block diagram of Fig. 3 to perform the arithmetic processing in accordance with the flowcharts of Figs. 5 to 7. Therefore, the description thereof will not be provided here.

On the basis of the composition of gaseous fuel estimated by the composition determining unit 100, the fuel supply amount control unit 201 calculates, for example, quadruple values of the equivalent of the oxygen molecules capable of reacting at the time of complete combustion of the gaseous fuel, and calculates a supply amount of fuel on the basis of the quadruple values, the sweep DC current, and the fuel utilization rate.

The for-reforming water supply amount control unit 202 calculates, for example, the carbon number of gaseous fuel on the basis of the composition of gaseous fuel estimated by the composition determining unit 100, and calculates the supply amount of for-reforming water on the basis of the carbon number.

For example, in a case of a mixed gas of methane CH4 and propane C3H8, the supply amount of for-reforming water (target value) is calculated from the supply amount of fuel and the composition of gaseous fuel (molar fraction CS(CH4) of methane CH4 and the molar fraction CS(C3H8) of propane C3H8) by the following formula.

$$\text{Supply amount of for-reforming water} = \text{supply amount of fuel} \times$$
$$(CS(CH4) \times 1 + CS(C3H8) \times 3)/22.414 \times S/C \times 18.02$$

In the formula, "1" is the carbon number of methane CH4, "3" is the carbon number of propane C3H8, "22.414" is the molar volume (L/mol), S/C is a steam-carbon ratio (target value, for example, 2.5), and "18.02" is the molar mass of water.

The cathode air supply amount control unit 203 calculates the supply amount of cathode air, on the basis of the composition of gaseous fuel estimated by the composition determining unit 100 or on the basis of the target power generation conditions including the air utilization rate or the air ratio.

When performing the calculation on the basis of the target power generation conditions, the supply amount of cathode air (target value) is calculated by the following formula.

$$\text{Supply amount of air} = [\text{total number of cell} \times \text{current amount of}$$
$$\text{single cell} \times 60)/[Ua \times Fd \times (\text{molar fraction of O2 in the air} \times 4)] \times$$
$$22.414$$

Here, Ua is a predetermined rate of air utilization (target value, for example, 0.30), Fd is the Faraday constant (96485.3399), and "22.414" is the molar volume (L/mol). Furthermore, "4" is the number of electrons generated from 02 due to the electrode reaction (see the above-described electrode reaction formula).

Although the supply amount of cathode air is calculated based on the target power generation conditions, it may be calculated based on the supply amount of fuel and the air-fuel ratio.

The supply amount of fuel, the supply amount of for-reforming water, and the supply amount of cathode air calculated in this way are set as the control target values, respectively, and the controls thereof are performed via the fuel supply device 14, the for-reforming water supply device 19, and the cathode air supply device 20.

According to the fuel cell system of the present embodiment, since there is provided the fuel supply amount control unit 201 configured to control the supply amount of fuel of the fuel supply device 14 to the fuel reforming device 11 on the basis of the composition determined by the composition determining unit 100, it is possible to appropriately reflect the composition variation of gaseous fuel in the fuel control to the fuel reforming device 11 and thus in the power generation control of the fuel cell system, and it is possible to improve the stability of the fuel cell system.

Furthermore, according to the fuel cell system of the present embodiment, since there is provided the for-reforming water supply device 19 configured to supply water for steam reforming to the fuel reforming device 11, and the for-reforming water supply amount control unit 202 configured to control the supply amount of water of the for-reforming water supply device 19 on the basis of the composition determined by the composition determining unit 100, it is possible to appropriately reflect the composition variation of the gaseous fuel in the supply control of the for-reforming water.

Furthermore, according to the fuel cell system of the present embodiment, since there is provided the cathode air supply device 20 configured to supply the cathode air to the fuel cell stack 12, and the cathode air supply amount control unit 203 configured to control the amount of air supply of the cathode air supply device 20 on the basis of the composition determined by the composition determining unit 100, it is possible to appropriately reflect the composition variation of the gaseous fuel in the supply control of the cathode air.

Alternatively, in the fuel cell system, when a supply device of for-reforming air is provided in order to jointly use the partial oxidation reaction as the reforming reaction, a for-reforming air supply amount control unit configured to control the supply amount of for-reforming air may be provided.

For example, in a case of a mixed gas of methane and propane, the supply amount of for-reforming air is calculated from the supply amount of fuel, the composition of the gaseous fuel (molar fraction CS(CH4) of methane CH4, and molar fraction CS(C3H8) of propane C3H8) by the following formula.

$$\text{Supply amount of for-reforming air} = \text{supply amount of fuel} \times$$
$$(\text{CS(CH4)} \times 1 + \text{CS(C3H8)} \times 3)/(\text{oxygen concentration in the air}) \times$$
$$\text{O/C}$$

In the formula, O/C is an oxygen-carbon ratio.

Finally, the arrangement positions of the thermal flow meter 3 or the like in the first embodiment (Fig. 1) and the thermal flow meter 15 or the like in the second embodiment (Fig. 9 or Fig. 10) will be additionally described.

In Fig. 1, the thermal flow meter 3, the ultrasonic flow meter 4, the fuel temperature sensor 5, and the fuel pressure sensor 6 (hereinafter, these are referred to as "sensors 3 to 6") are disposed on the upstream side of the fuel supply device 2. Similarly, in Fig. 9 (or Fig. 10), the thermal flow meter 15, the ultrasonic flow meter 16, the fuel temperature sensor 17, and the fuel pressure sensor 18 (hereinafter, these are referred to as "sensors 15 to 18") are disposed on the upstream side of the fuel supply device 14. The reason is that a pump is generally included in the fuel supply device, and when disposing the flow meter on the downstream side thereof, there is a possibility of influence on the measurement of the flow meters due to pulsating flow of the pump.

Therefore, when it is preferred to stably grasp the composition of the supplied fuel as accurate as possible, it is preferable to dispose the sensors on the upstream side of the fuel supply device.

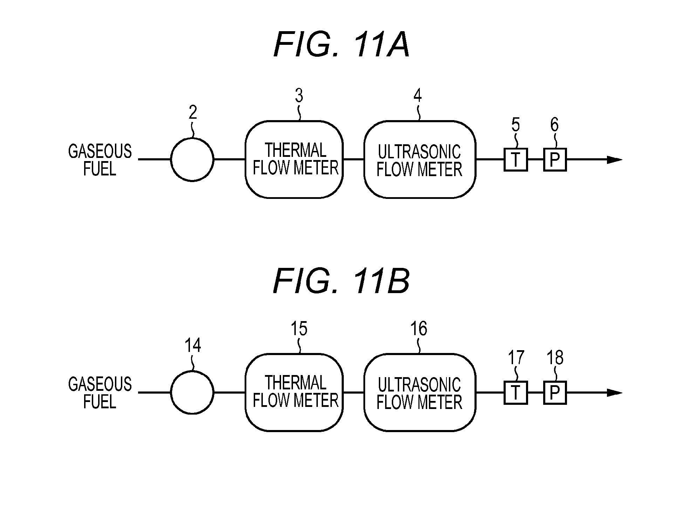

In contrast, when it is preferred to grasp the flow rate of fuel supplied to the supply target 1 (fuel reforming device 11) in practice, it is preferable to dispose the sensors on the downstream side of the fuel supply device. Thus, in this case, as illustrated in Fig. 11A, the sensors 3 to 6 are disposed on the downstream side of the fuel supply device 2, or as illustrated in Fig. 11B, the sensors 15 to 18 are disposed on the downstream side of the fuel supply device 14.

Although in the above-described embodiments, the main ingredient of the hydrocarbon-based gaseous fuel is methane CH4, the sub-ingredient candidates are hydrogen H2 and propane C3H8, and the other ingredient mixed into the gaseous fuel is nitrogen N2, the invention is not limited thereto.

Furthermore, as the hydrocarbon-based gaseous fuel, city gas, LPG or the like is assumed. In particular, in many cases, when using city gas derived from natural gas, the composition may vary depending on gas companies or depending on regions even in a case of the same gas company, and in addition, the composition may vary due to mixing of the air on the way or the like depending on a pathway or a distance from a supply source. When the component varies in this way, the thermal flow meter may not indicate the correct value, and accordingly it may be difficult to perform a preferred control.

In this regard, in the present invention, even when the composition of gaseous fuel varies, it is possible to accurately estimate the composition of the gaseous fuel, and thus, it is possible to appropriately reflect a variation in composition of the gaseous fuel in control of the supply amount of fuel in the fuel supply system or the fuel cell system.

Furthermore, even when the gaseous fuel changes, for example, from city gas to LPG or from LPG to city gas, it is possible to automatically detect the change in the gaseous fuel (composition variation). Moreover, by notifying the change to the control device, it is possible to suitably cope with the change by, for example, changing the control program of the control device to that corresponding to the change in gaseous fuel.

Furthermore, as for city gas, it is also possible to apply the present invention to a gas mixed with a hydrocarbon gas derived from a bio-gas or derived from a shale gas, or a gas mixed with an off-gas (hydrocarbon gas that is not derived from natural gas) produced as a byproduct in petrochemical plants.

Furthermore, the illustrated embodiments are intended to merely illustrate examples of the present invention, and it is needless to say that the present invention covers various improvements and modifications to be made by those skilled in the art within the scope of the appended claims, in addition to those directly illustrated by the described embodiments.

**List of reference numerals**

1 Supply target
2 Fuel supply device

| 3 | Thermal flow meter |
|---|---|
| 4 | Ultrasonic flow meter |
| 5 | Fuel temperature sensor |
| 6 | Fuel pressure sensor |
| 7 | Control device |
| 11 | Fuel reforming device |
| 12 | Fuel cell stack |
| 13 | Desulfurizer |
| 14 | Fuel supply device |
| 15 | Thermal flow meter |
| 16 | Ultrasonic flow meter |
| 17 | Fuel temperature sensor |
| 18 | Fuel pressure sensor |
| 19 | For-reforming water supply device |
| 20 | Cathode air supply device |
| 21 | Control device |

**Claims**

1. A method for determining a composition of a hydrocarbon-based gaseous fuel supplied to a supply target by a fuel supply device, comprising the steps of:

   measuring a speed of sound of the gaseous fuel using an ultrasonic flow meter;
   estimating a carbon number of the gaseous fuel on the basis of the measured speed of sound; and
   estimating the composition of the gaseous fuel on the basis of the estimated carbon number.

2. A device for determining a composition of a hydrocarbon-based gaseous fuel supplied to a supply target by a fuel supply device, comprising:

   a sound speed measuring unit configured to measure a speed of sound of the gaseous fuel using an ultrasonic flow meter;
   a carbon number estimating unit configured to estimate a carbon number of the gaseous fuel on the basis of the measured speed of sound; and
   a composition estimating unit configured to estimate the composition of the gaseous fuel on the basis of the estimated carbon number.

3. The device for determining the composition of the gaseous fuel according to claim 2, wherein the carbon number estimating unit estimates the carbon number from a temperature and the speed of sound, on the basis of a characteristic of the carbon number with respect to the speed of sound at each temperature.

4. The device for determining the composition of the gaseous fuel according to claim 2, wherein the composition estimating unit specifies a sub-ingredient from predetermined sub-ingredient candidates, depending on a result of comparison between the estimated carbon number and a carbon number previously determined for a main ingredient of the gaseous fuel, and estimates concentrations of the main ingredient and the specified sub-ingredient.

5. The device for determining the composition of the gaseous fuel according to claim 2, further comprising:

   a mass flow meter configured to measure a mass flow rate of the gaseous fuel supplied by the fuel supply device;
   a volumetric flow meter configured to measure a volumetric flow rate of the gaseous fuel supplied by the fuel supply device;
   a first conversion factor calculating unit configured to calculate a conversion factor of the mass flow meter, on the basis of the measurement results of the mass flow meter and the volumetric flow meter;
   a second conversion factor calculating unit configured to calculate an estimated conversion factor in the composition estimated by the composition estimating unit; and
   a comparison-and-verification unit configured to compare and
   verify the estimation result of the composition estimating unit, by comparing the calculation results of the first and second conversion factor calculating units.

6. The device for determining the composition of the gaseous fuel according to claim 5,
   wherein the volumetric flow meter is an ultrasonic flow meter,
   wherein the sound speed measuring unit is configured to measure the speed of sound in the gaseous fuel, on the basis of an intermediate output of the ultrasonic flow meter.

7. The device for determining the composition of the gaseous fuel according to claim 5, further comprising:

   a composition re-estimating unit configured to estimate the composition of the gaseous fuel again, by assuming that another ingredient is mixed in the gaseous fuel when the comparison-and-verification unit determines that there is a mismatch.

8. A fuel supply system including a fuel supply device configured to supply a hydrocarbon-based gaseous fuel to a supply target, the fuel supply system comprising:

   the composition determining device according to claim 2; and
   a fuel supply amount control unit configured to control a supply amount of fuel of the fuel supply device on the basis of the composition determined by the composition determining device.

9. The fuel supply system according to claim 8, wherein the fuel supply amount control unit is configured to estimate a calorific value of the gaseous fuel on the basis of the composition estimated by the composition estimating unit, and to control the supply amount of gaseous fuel so that a calorific value per unit time becomes a predetermined value.

10. A fuel cell system including a fuel supply device configured to supply a hydrocarbon-based gaseous fuel, a fuel reforming device configured to generate a hydrogen-rich reformed fuel by reforming the supplied gaseous fuel, and a fuel cell stack configured to perform power generation by an electrochemical reaction between the generated reformed fuel and air, the fuel cell system comprising:

    the composition determining device according to claim 2; and
    a fuel supply amount control unit configured to control a supply amount of fuel of the fuel supply device on the basis of the composition determined by the composition determining device.

11. The fuel cell system according to claim 10, further comprising:

    a for-reforming water supply device configured to supply water for steam reforming to the reforming device; and
    a for-reforming water supply amount control unit configured to control a supply amount of water of the for-reforming water supply device, on the basis of the composition determined by the composition determining device.

12. The fuel cell system according to claim 10, further comprising:

    a cathode air supply device configured to supply cathode air to the fuel cell stack; and
    a cathode air supply amount control unit configured to control a supply amount of air of the cathode air supply device, on the basis of the composition determined by the composition determining device.

# FIG. 1

EP 2 829 870 A1

# FIG. 2

FLOW DIRECTION V

FORWARD DIRECTION
DIFFUSION SPEED C + V

REVERSE DIRECTION
DIFFUSION SPEED C − V

SPEED OF SOUND: C

ARRIVAL TIME FROM
UPSTREAM TO DOWNSTREAM

$$t1 = \frac{L}{C+V} \qquad \frac{1}{t1} = \frac{C+V}{L}$$

ARRIVAL TIME FROM
DOWNSTREAM TO UPSTREAM

$$t2 = \frac{L}{C-V} \qquad \frac{1}{t2} = \frac{C-V}{L}$$

# FIG. 3

101 — SOUND SPEED MEASUREMENT

102 — CARBON NUMBER ESTIMATION

103 — COMPOSITION ESTIMATION

105 — SECOND CONVERSION FACTOR CALCULATION

106 — COMPARISON AND VERIFICATION

107 — COMPOSITION RE-ESTIMATION

VOLUMETRIC FLOW METER

104 — FIRST CONVERSION FACTOR CALCULATION

MASS FLOW METER

# FIG. 4

———— TEMPERATURE T1 (−10°C)

− − − − − − TEMPERATURE T2 (60°C)

# FIG. 5

$$( \text{DETERMINE COMPOSITION} )$$

S1 | MEASURE SPEED OF
SOUND C IN GASEOUS FUEL

S2 | MEASURE VOLUMETRIC
FLOW RATE Qv

S3 | MEASURE FUEL
TEMPERATURE Tf

S4 | MEASURE FUEL PRESSURE Pf

S5 | MEASURE MASS
FLOW RATE Qm

S6 | CALCULATE CONVERSION FACTOR CF

$$CF = \frac{Qv \times (273.15 \div (273.15 + Tf)) \times ((101.33 + Pf) \div 101.33)}{Qm \div \gamma}$$

S7 | CALCULATE CARBON
NUMBER AT TEMPERATURE
T1 FROM SPEED OF SOUND C

S8 | CALCULATE CARBON
NUMBER AT TEMPERATURE
T2 FROM SPEED OF SOUND C

S9 | CALCULATE CARBON NUMBER
CN AT TEMPERATURE Tf

S10 | CN < 1 — NO

YES

( 1 )          ( 2 )

# FIG. 6

①

S11 ASSUME MIXED GAS OF METHANE AND HYDROGEN

S12 CALCULATE ESTIMATED CONCENTRATION OF METHANE CS(CH4)    $CS(CH4) = CN \times 100(\%)$

S13 CALCULATE ESTIMATED CONCENTRATION OF HYDROGEN CS(H2)    $CS(H2) = 100 - CS(CH4)$

S14 CALCULATE ESTIMATED CONVERSION FACTOR CF'    $CF' = \dfrac{1}{CS(CH4)/CF(CH4) + CS(H2)/CF(H2)}$

S15 $CF - CF' < SL$  —— YES

NO

S16 CALCULATE ESTIMATED CONCENTRATION OF NITROGEN CS(N2)
$$CS(N2) = \frac{1/CF - [CS(CH4)/CF(CH4) + CS(H2)/CF(H2)] \div 100}{1/CF(N2) - [CS(CH4)'/CF(CH4) + CS(H2)'/CF(H2)] \div 100} \times 100(\%)$$

S17 RECALCULATE ESTIMATED CONCENTRATION OF METHANE CS(CH4)
$CS(CH4) = CS(CH4) - CS(N2) \times CS(CH4)' \div 100(\%)$

S18 RECALCULATE ESTIMATED CONCENTRATION OF HYDROGEN CS(H2)
$CS(H2) = CS(H2) - CS(N2) \times CS(H2)' \div 100(\%)$

END

# FIG. 7

②

S21 | ASSUME MIXED GAS OF METHANE AND PROPANE

S22 | CALCULATE ESTIMATED CONCENTRATION OF PROPANE CS(C3H8)

$CS(C3H8) = [CN - 1] \div 2 \times 100 (\%)$

S23 | CALCULATE ESTIMATED CONCENTRATION OF METHANE CS(CH4)

$CS(CH4) = 100 - CS(C3H8)$

S24 | CALCULATE ESTIMATED CONVERSION FACTOR CF'

$CF' = \dfrac{1}{CS(CH4)/CF(CH4) + CS(C3H8)/CF(C3H8)}$

S25 | $CF - CF' < SL$ — YES

NO

S26 | CALCULATE ESTIMATED CONCENTRATION OF NITROGEN CS(N2)

$CS(N2) = \dfrac{1/CF - [CS(CH4)/CF(CH4) + CS(C3H8)/CF(C3H8)] \div 100}{1/CF(N2) - [CS(CH4)'/CF(CH4) + CS(C3H8)'/CF(C3H8)] \div 100} \times 100(\%)$

S27 | RECALCULATE ESTIMATED CONCENTRATION OF METHANE CS(CH4)

$CS(CH4) = CS(CH4) - CS(N2) \times CS(CH4)' \div 100(\%)$

S28 | RECALCULATE ESTIMATED CONCENTRATION OF PROPANE CS(C3H8)

$CS(C3H8) = CS(C3H8) - CS(N2) \times CS(C3H8)' \div 100(\%)$

END

# FIG. 8

CONTROL SUPPLY
AMOUNT OF FUEL

S31
$$\text{CALORIFIC VALUE OF FUEL} = \frac{CS(CH4) \times H(CH4) + CS(H2) \times H(H2) + CS(C3H8) \times H(C3H8)}{100}$$

S32
$$\text{SUPPLY AMOUNT OF FUEL} = \frac{\text{TARGET SUPPLY CALORIFIC VALUE PER UNIT TIME}}{\text{CALORIFIC VALUE OF FUEL}}$$

END

FIG. 9

FIG. 10

## FIG. 11A

GASEOUS FUEL — 2 — THERMAL FLOW METER (3) — ULTRASONIC FLOW METER (4) — T (5) — P (6) →

## FIG. 11B

GASEOUS FUEL — 14 — THERMAL FLOW METER (15) — ULTRASONIC FLOW METER (16) — T (17) — P (18) →

## INTERNATIONAL SEARCH REPORT

International application No.

PCT/JP2013/056827

### A. CLASSIFICATION OF SUBJECT MATTER

$G01N29/02$(2006.01)i, $C01B3/34$(2006.01)i, $G01N29/00$(2006.01)i, $G01N29/44$ (2006.01)i, $H01M8/04$(2006.01)i, $H01M8/06$(2006.01)i

According to International Patent Classification (IPC) or to both national classification and IPC

### B. FIELDS SEARCHED

Minimum documentation searched (classification system followed by classification symbols)
G01N29/02, C01B3/34, G01N29/00, G01N29/44, H01M8/04, H01M8/06

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 10-185885 A  (Osaka Gas Co., Ltd.),<br>14 July 1998 (14.07.1998),<br>entire text; all drawings<br>(Family: none) | 1-12 |
| A | JP 2005-203143 A  (Toyota Motor Corp.),<br>28 July 2005 (28.07.2005),<br>entire text; all drawings<br>& US 2008/0008921 A1     & WO 2005/069417 A2 | 1-12 |
| A | JP 2003-77518 A  (Nippon Soken, Inc.),<br>14 March 2003 (14.03.2003),<br>entire text; all drawings<br>(Family: none) | 1-12 |

[X]  Further documents are listed in the continuation of Box C.   [ ]  See patent family annex.

| | |
|---|---|
| *   Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| | |
|---|---|
| Date of the actual completion of the international search<br>    03 June, 2013 (03.06.13) | Date of mailing of the international search report<br>    11 June, 2013 (11.06.13) |
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2013/056827 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2004-514138 A  (Lattice Intellectual Property Ltd.), 13 May 2004 (13.05.2004), entire text; all drawings & US 2004/0261497 A1    & EP 1337844 A & WO 2002/040992 A1 | 1-12 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005203143 A
- JP 2003077518 A
- JP 2004514138 W
- WO 2002040992 A